# EUROPEAN PATENT SPECIFICATION

(11) **EP 2 037 256 B1**
(45) Date of publication and mention of the grant of the patent: **20.02.2013**
(21) Application number: 08164034.4
(22) Date of filing: 10.09.2008
(51) Int. Cl.: G01N 21/88, B65G 47/00, G01N 21/90

(54) **Inspection machine**
Untersuchungsgerät
Machine d'inspection

(30) Priority: 11.09.2007 IT CR20070023
(43) Date of publication of application: 18.03.2009
(73) Proprietor: Pharmamech SrL, 4044 Collecchio (PR) (IT)
(72) Inventor: Storci, Germano, 43044, COLLECCHIO (IT); Arletti, Stefano, 43044, COLLECCHIO (PARMA) (IT)
(74) Representative: Leone, Mario

(56) References cited:
- JP-A- 57 142 252
- US-A- 4 241 256
- US-A- 6 055 876

## Description

The present invention relates to an inspection machine of the type that is widely used in pharmaceutical, food or other industries requiring identification and rejection from the packaging line of various products that cannot pass the quality check. In these machines, cameras or other devices are used to check certain product characteristics, such as the fill level of bottles, vials or other containers, and to identify foreign particles, the presence of imperfect, incorrectly labeled or damaged containers, [SP1]etc. to be rejected from the packaging line as unsuitable for sale.

Rotary machines, having a "carousel" associated with the machine frame and a checking system with various inspection devices, are traditionally used for inspecting and determining whether a product can go through the packaging cycle or must be rejected. A widely used checking system, in its complete version, is composed of three main elements: a camera, located inside or outside the carousel in small machines, one or more screens opposite the camera and an illuminating system composed of one or more product illuminating devices.

In prior art machines, the detection system, of any type whatever, and the carousel are supported by a single central post or shaft, which provides the only axis about which both devices can rotate.

The carousel has the purpose of continuously and smoothly handling the products, whereas the coaxial rotating device performs a quick reciprocating motion after the product and back so that, for a given time, the product is held still with respect to the checking device.

The checking device is driven by well known techniques, e.g. using mechanical cams and indexers or electronic means, i.e. motors

An example of prior art is described in the document US4241256 which discloses Apparatus for detecting foreign matters by illuminating foreign matters which swirl together with a liquid in a transparent container and measuring transmitted light. Transparent containers filled with liquid are fed one by one to the receiving seats on the transferring board which moves continuously at a fixed speed. The transparent container on the receiving seat, upon arrival at a certain position, is turned at high speed, while being transferred continuously. Foreign matters that might be preset in liquid are caused to suspend in the liquid. The transparent container, with foreign matters suspended, is moved to the position where the optical detector is located, then the optical detector begins to move in synchronism with the transferring board. During this synchronous movement the container is illuminated by the light source in the optical detector and the light which has been transmitted through the liquid is received by the optical detector.

Another document, US6055876, relates to a non-contact type inspection _system for inspection of test samples being conveyed, using a non-contact type inspection device, to judge the quality of the test samples automatically. The non-contact type inspection system comprises an annular rotary table which is rotated to convey test samples, an inspection device mounting table disposed inside and outside the rotary table, and having a CCD camera and the like as a non-contact type inspection device for inspection of the test samples being mounted on the inspection device mounting table, a rotary head which is supported above the rotary table and rotatably about the rotation center of the rotary table to bold the upper portions of the test samples being conveyed by the rotary table, and an interlocking mechanism for rotating the rotary head in synchronism with the rotary table.

All the above technical solutions have the drawback that a single shaft or post is secured to the machine frame for supporting both the rotating carousel and the movable support frame for the checking devices. Due to the provision of a single shaft, the checking device cannot be interposed between such shaft and the container to be inspected where it would obstruct the vision path of the camera, wherefore the latter must be placed close to the part to be analyzed. The short distance of said camera from the product under examination leads to a lower image resolution, caused by the impossibility of perfectly focusing the whole product, wherefore any undesired particles or defective or reject parts might not be detected, and the lens might be soiled.

These problems are currently addressed in various manners: for example, a mirror is placed close to the post, with a 45° inclination to a horizontal plane. The mirror is designed to reflect the image of the container, radiated by the illuminating system, to the camera, which can be thus located at a longer distance, possibly on the support post.

Nonetheless, this solution may involve the formation of spots on the reflection mirror as the containers are handled and shaken on the carousel, as well as a more complex construction and a worse image quality.

Alternatively, a good image precision can be obtained by placing the camera outside the carousel, but this involves larger sizes for both the inspection machine and the overall plant in which it is placed. Therefore, this solution is only applicable to small machines. The machines in which the camera is inside the carousel have the serious drawback that checking and periodic maintenance of the camera are hindered by its position inside the device, which makes it actually inaccessible.

An additional drawback of this mechanism is that the inspection device is not directly connected to the motor via its frame, but such connection is typically established through a belt or indexing gear drive. This induces vibrations and oscillations that alter the stability of the mechanism, thereby affecting the performance of the checking system.

The present invention has the object of obviating the above drawbacks.

The object of the invention is fulfilled by providing an inspection machine according to the claim 1.

In a preferred embodiment, the carousel and the checking means are directly fitted to their respective drive shafts, wherefore no connection and drive members such as belts, etc. are required.

Advantageously, the inspection machine is also characterized in that the motors have a shaft coinciding with the axis of rotation and that shaft is hollow.

More advantageously, the carousel hangs from a frame supported by posts, the latter being located outside the circumference described by the rotation of the carousel and being connected to the machine frame.

The independence of the support shafts from each other provides an intermediate central zone, with no traditional support column therein, where the detection means, such as the camera of the inspection system encounter no obstacle, and the camera may be placed at the most appropriate and efficient distance for analyzing the products under examination and provide accurate and well-defined image at the best resolution. Indeed, a longer distance of the camera allows a more effective identification of unsuitable containers, to be rejected from the packaging line and conveyed to a dedicated reject path.

The advantages provided by the present invention essentially consist in that the lack of the central post, that acts as an obstacle, removes any interference with the field of view of the camera, which may ensure a more accurate vision due to its longer distance from the product, while remaining within the dimensions of the carousel. This provides a greater freedom in positioning the checking device as well as easier access thereto, for more accurate and precise cleaning, and for any adjustment and maintenance. The invention also provides the additional advantage of a simpler mechanical construction, as well as lower fabrication and maintenance costs. The checking device, which is directly associated with the drive shaft, has a lighter weight, which reduces inertia and hence oscillations.

Yet another advantage of the invention is that the positions of the carousel and the checking devices are interchangeable. Thus, either the posts support the frame from which the container handling carousel hangs, with the checking devices on the ground under it, or the checking devices are supported by the posts and the carousel is on the ground under them.

Further characteristics and advantages of the invention will be more apparent from the following detailed description, taken in conjunction with the drawings which represent a preferred embodiment, by way of example and without limitation.
Figure 1 is a vertical cross section of an inspection machine for identifying containers unsuitable for sale, constructed according to the present invention.
Figure 2 is a schematic plan view of the machine, showing the advantageous position of the support columns outside the handling carousel.

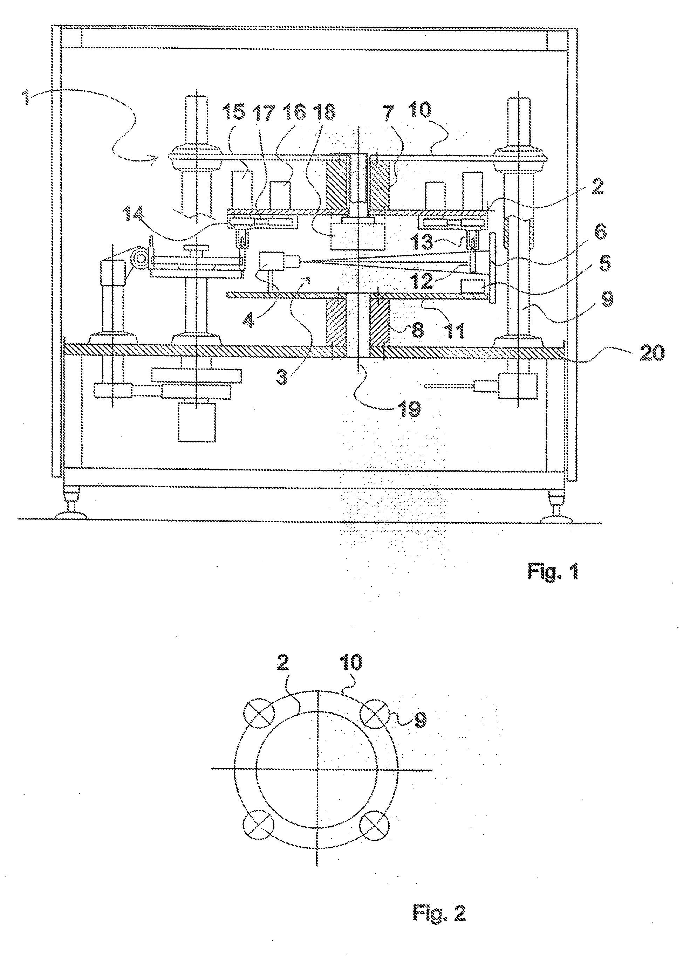

Referring to Figure 1, the inspection machine 1 mainly comprises a product handling carousel 2, having container gripping and handling means of known type, and a checking device 3. The device of the figure comprises a detector i.e. a camera 4, a radiation source device, i.e. an illuminator 5 and a screen 6.

The source (illuminator), the detector (camera) and the screen can be placed in various positions as needed.

Those skilled in the art may obviously select the checking device from those currently known, such as X ray devices, laser devices, etc.

The carousel 2 and the checking device 3 are driven by two separate motors: a first motor 7 and a second motor 8 respectively.

Referring to Figure 1, the carousel 2 is shown it hang, via the motor 7, from a top frame 10, which is in turn supported by posts 9 secured to a surface 20 of the frame of the machine 1, and located outside said carousel 2, to clear the vision of the camera 4, which is the basic element of the checking device 3.

The support posts 9 may be of telescopic type, to allow adjustment of the distance between the plane of the carousel plan and that of the checking device 3.

More in detail, the products 12 transported by the carousel 2 are held by grippers 13. These grippers 13 are the end portion of a rotating body 14 which is in turn supported by a gripper control cylinder 15. The rotating body 14 is driven by additional motors 16, which are located on the carousel 2 and are connected by drive belts 17.

Figure 1 also shows in a more accurate manner that the checking device 3 comprises a movable support 11 directly associated with the shaft of the motor 8, which is in turn secured to the surface 20 of the frame of the machine 1.

Therefore, the carousel 2 and the checking device 3 are supported by two shafts that are part of the motors 7 and 8, aligned and separate along the same vertical axis of rotation 19.

The two distinct and coaxial motors 7 and 8 have hollow shafts, wherefore transmission lines pass therethrough and, considering the motor 7, reach a rotary joint 18 disposed on the same vertical axis, in a central position above the checking device 3. Such rotary joint 18 is designed to supply air, power, etc, to the other parts of the system associated with the carousel 2.

The advantages of the invention mainly consist in that the lack of a central support post, replaced by as many external telescopic posts 9 as required, increases the efficiency of the checking device 3, which may be thus located at a longer distance from the product 12, to increase image resolution. The positions of the carousel 2 and the checking device 3 can be interchanged, i.e. reversed, and a simpler and less expensive construction, as well as easier maintenance, are achieved.

Obviously, within the principle of the invention, many variant embodiments may be envisaged according to the claims.

## Claims

1. An inspection machine (1) comprising
a. a carousel (2) for handling products (12) to be checked,
b. a checking device (3)
said carousel (2) and said checking device (3) driven by two distinct and coaxial motors: a first motor (7) and a second motor (8) respectively, and supported by shafts that are part of said motors (7,8); the carousel (2) directly associated to the shaft of the first motor (7) and the checking device (3) directly associated to the shaft of the second motor (8),
said two shafts being aligned and separate along the same vertical axis (19) of rotation, for independently bearing the carousel (2) and the checking device (3),
wherein said two distinct and coaxial motors (7 and 8) have, said two shafts, which shafts are hollow, wherefore transmission lines pass therethrough.

2. An inspection machine (1) as claimed in claim 1, **characterized in that** the transmission lines of motors (7,8) pass therethrough and, considering the first motor (7), reach a rotary joint (18) disposed on the same vertical axis (19) for supplying air, power, etc, to the other parts of the system associated with the carousel (2).

3. An inspection machine (1) as claimed in claim 1, **characterized in that** products (12) transported by the carousel (2) are held by grippers (13) which are the end portion of a rotating body (14) which is in turn supported by a gripper control cylinder (15).

4. An inspection machine (1) as claimed in claim 3, **characterized in that** said rotating body (14) is driven by additional motors (16), which are located on the carousel (2) and are connected by drive belts (17).

5. An inspection machine as claimed in claim 1, **characterized in that** post (9) and the second motor (8) are secured to a surface (20) of the frame of the machine (1).

6. An inspection machine as claimed in claim 1, **characterized in that** said checking device (3) include at least one detector (4) located opposite the products to be checked (12) with respect to said axis of rotation (19).

7. An inspection machine as claimed in claim 1, **characterized in that** said support posts (9) are telescopic to allow adjustment of the distance between the plane of the carousel plan and that of the checking device (3).

8. An inspection machine as claimed in claim 5, **characterized in that** said checking device (3) further comprising a radiation source device, i.e. an illuminator (5) and a screen (6).

9. An inspection machine as claimed in claim 1, **characterized in that** said checking device (3) being placed on a movable support (11).

## Patentansprüche

1. Prüfmaschine (1) umfassend
a. ein Karussel (2) für die Handhabung von zu überprüfenden Produkten (12),
b. eine Prüfeinrichtung (3),
wobei das besagte Karussel (2) und die besagte Prüfeinrichtung (3) von zwei getrennten und koaxialen Motoren angetrieben werden: einem ersten Motor (7) respektive einem zweiten Motor (8), die von Wellen unterstützt werden, die Bestandteile der besagten Motoren (7, 8) sind; wobei das Karrussel (2) direkt mit der Welle des ersten Motors (7) verbunden und die Prüfeinrichtung (3) direkt mit der Welle des zweiten Motors (8) verbunden ist,
wobei die besagten zwei Wellen so ausgerichtet und getrennt entlang dergleichen vertikalen Drehachse (19) sind, um das Karussel (2) und die Prüfeinrichtung (3) selbständig zu tragen,
wobei die besagten zwei getrennte und koaxiale Motoren (7) und (8) die besagten zwei Wellen aufweisen; die Wellen sind hohl, wobei Übertragungsleitungen hindurchtreten.

2. Prüfmaschine (1) nach Anspruch 1, **dadurch gekennzeichnet, dass** die Übertragungsleitungen der Motoren (7, 8) hindurchtreten, und sie unter Berücksichtigung des ersten Motors (7) ein Drehgelenk (18) erreichen, das auf derselben vertikalen Achse (19) angeordnet ist, um Luft, Leistung usw. den anderen Teilen des mit dem Karrusel (2) verbundenen System zu liefern.

3. Prüfmaschine (1) nach Anspruch 1, **dadurch gekennzeichnet, dass** die von dem Karussel (2) beförderten Produkte (12) von Greifen gehalten werden, die der Endabschnitt eines drehenden Körpers (13) sind, der wiederum von einem Kontrollzylinder (15) des Greifens unterstützt wird.

4. Prüfmaschine (1) nach Anspruch 3, **dadurch gekennzeichnet, dass** der besagte drehende Körper (14)von zusätzlichen Motoren (16) angetrieben wird, die auf dem Karussel (2) angeordnet und mit Antriebsriemen verbunden sind.

5. Prüfmaschine (1) nach Anspruch 1, **dadurch gekennzeichnet, dass** ein Pfosten (9) und der zweite Motor (8) auf einer Oberfläche (20) des Rahmens der Maschine (1) befestigt sind.

6. Prüfmaschine (1) nach Anspruch 1, **dadurch gekennzeichnet, dass** die besagte Prüfeinrichtung (3) mindestens einen Detektor (4) umfasst, der sich entgegengesetzt bezüglich der zu kontrollierenden Produkte (12) mit Bezug auf die besagte Drehachse (19) befindet.

7. Prüfmaschine (1) nach Anspruch 1, **dadurch gekennzeichnet, dass** die besagten Stützpfosten (9)teleskopisch sind, um die Regelung des Abstandes zwischen der Ebene des planen Karussels und derjenige der Prüfeinrichtung zu gestatten.

8. Prüfmaschine (1) nach Anspruch 5, **dadurch gekennzeichnet, dass** die besagte Prüfeinrichtung (3) auch eine Einrichtung mit einer Strahlungsquelle, d.h. eine Beleuchtungseinrichtung und einen Bildschirm umfasst.

9. Prüfmaschine (1) nach Anspruch 1, **dadurch gekennzeichnet, dass** die besagte Prüfeinrichtung (3) auf einer beweglichen Halterung (11) angeordnet sind.

## Revendications

1. Machine d'inspection, comprenant
a. un carrousel (2) pour traiter des produits (12) à contrôler,.
b. un dispositif de contrôle (3)
ledit carrousel (2) et ledit dispositif d'inspection (3) étant entrainés par deux moteurs distincts et coaxiaux ; un premier moteur (7) et un deuxième moteur (8) respectivement, et étant supportés par des arbres qui font partie desdits moteurs (7, 8) ; le carrousel (2) étant directement associé à l'arbre du premier moteur (7) et le dispositif de contrôle (3) étant directement associé à l'arbre du deuxième moteur (8),
lesdits deux arbres étant alignés et séparés le long du même axe vertical (19) de rotation, pour supporter indépendamment le carrousel (2) et le dispositif de contrôle (3),
dans laquelle lesdits deux moteurs (7) et (8) distincts et coaxiaux portent lesdits deux arbres, les arbres étant creux, d'où des lignes de transmission passent à travers.

2. Machine d'inspection (1) selon la revendication 1, **caractérisée en ce que** les lignes de transmission des moteurs (7, 8) passent à travers et, en considérant le premier moteur (7), elles passent à travers et atteignent un joint rotatif (18) disposé sur le même axe vertical (19) pour fournir de l'air, de la puissance, etc., aux autres parties du système associé au carrousel (2).

3. Machine d'inspection (1) selon la revendication 1, **caractérisée en ce que** des produits (12) transportés par le carrousel (2) sont maintenus par des pinces (13) qui sont la partie d'extrémité d'un corps rotatif (14) qui à la fois est supporté par un cylindre (15) de contrôle des pinces.

4. Machine d'inspection (1) selon la revendication 3, **caractérisée en ce que** ledit corps rotatif (14) est entraîné par des moteurs supplémentaires, qui sont logés sur le carrousel (2) et sont connectés par des courroies d'entraînement (17).

5. Machine d'inspection selon la revendication 1, **caractérisée en ce que** montant (9) et le deuxième moteur (8) sont fixés à une face (20) du châssis de la machine (1).

6. Machine d'inspection selon la revendication 1, **caractérisée en ce que** ledit dispositif de contrôle (3) comprend au moins un détecteur (4) situé en face des produits à contrôler (12) par rapport au dit axe de rotation (19).

7. Machine d'inspection selon la revendication 1, **caractérisée en ce que** lesdits montants de support (9) sont télescopiques pour permettre un réglage de la distance entre le plan du carrousel plan et celui du dispositif de contrôle (3).

8. Machine d'inspection (1) selon la revendication 5, **caractérisée en ce que** ledit dispositif de contrôle (3) comprend aussi une source d'un dispositif de radiation, soit un illuminateur (5) et un écran (6).

9. Machine d'inspection (1) selon la revendication 1, **caractérisée en ce que** ledit dispositif de contrôle (3) est situé sur un support mobile (11).
